# EUROPEAN PATENT APPLICATION

(11) **EP 4 647 857 A1**
(43) Date of publication of application: **12.11.2025**
(21) Application number: 24174934.0
(22) Date of filing: 08.05.2024
(51) Int. Cl.: G05B 19/042, G06K 19/07

(54) **SYSTEM AND METHOD FOR QUERYING AND/OR CHANGING DATA OF AN AUTOMATION DEVICE**

(71) Applicant: ABB Schweiz AG, 5400 Baden (CH)
(72) Inventor: Lagler, Christoph, 5142 Eggelsberg (AT)
(74) Representative: Patentanwälte Pinter & Weiss OG

(57) **Abstract**

To ensure simple and flexible parameterization and data retrieval of automation devices of an automation system - regardless of the current power supply and/or operating status of an automation device (2), a system (1) for querying and/or changing data (ID, PAR, DAT) of the automation device (2) and an associated method is proposed, wherein the system (1) comprises at least one automation device (2), which can be integrated into an automation system via a communication network (3), in particular a fieldbus system, and a mobile device (4), which is set up for establishing a near-field communication connection (5). A near-field communication module (6) is integrated into the automation device (2), which near-field communication module (6) is set up for storing the data (ID, PAR, DAT) of the automation device (2) and for wireless exchange of the data (ID, PAR, DAT) of the automation device (2) with the mobile device (4), the mobile device (4) interacting with the near-field communication module (6) integrated in the automation device (2) in such a way, that the mobile device (4) transfers energy to the near-field communication module (6), required for the exchange of the data (ID, PAR, DAT) of the automation device (2) via the near-field communication connection (5), during a powerless state of the automation device (2). Furthermore, the mobile device (4) is set up to read out the data (ID, PAR, DAT) of the automation device (2) stored in the near-field communication module (6), to display the data (ID, PAR, DAT) and change changeable data (PAR) of the displayed data (ID, PAR, DAT) via a user interface provided by the mobile device (4) and to transmit data changes to the near-field communication module (6) for storage via near-field communication connection (5).

## Description

### TECHNICAL FIELD OF THE INVENTION

The present invention relates generally to the field of industrial automation systems. In particular, the invention relates to a system for querying and/or changing data of an automation device, wherein the system comprises at least one automation device, which can be integrated into an automation system via a communication network, in particular a fieldbus system, and wherein the data, in particular a fieldbus address, is stored within the automation device. Furthermore, the invention relates to an associated method for querying and/or changing data of an automation device.

### BACKGROUND INFORMATION

Nowadays, automation systems, like e.g. robot systems, transportation systems or automated machines, are widely used in industrial manufacturing processes in most of the modern manufacturing and production facilities. Usually, such an automation system may comprise many automation devices and peripheral components (e.g., sensor units, actuators) While the peripheral components, such as sensor units and actuators, are typically used e.g., to detect, measure and/or record data (e.g. control variables, measured values, etc.) and to execute control commands for performing certain operational tasks during operation of the automation system, the automation devices, on the other hand, are used to control, for example, industrial electromechanical processes in the automation system and/or to make operational decisions for the automation system.

Usually, an automation device is equipped with hardware, for example a processing unit (e.g., controller, microcontroller, microprocessor, etc.), and a respective software or firmware to perform data processing required to carry out its specific automation tasks. Furthermore, the automation devices of an automation system are connected via a communication network, in particular a fieldbus system, to exchange data, like e.g., data measured or detected by sensor units and/or control commands to control the actuators. Each automation device of the automation system requires a unique network address (e.g., fieldbus address) to secure smooth communication within the automation system between the automation devices. The unique network address of the respective automation device must be set once during installation and/or commissioning of the automation system, e.g., by a service technician and is then stored within the respective automation device.

Currently, the respective automation device has to be powered, before the network address can be set via a pluggable programming tool, for example, during commissioning. The respective automation device has to be rebooted, for example, to be integrated into the communication network by a network master unit (e.g., Programmable Logic Controller, Industrial-PC). If, for example, a fieldbus system is used as communication network, a Programmable Logic Controller (short PLC) can be used as fieldbus master, which integrates the respective automation device into the fieldbus system. Once the respective automation device has been integrated into the communication network, the technician can communicate with the respective automation device via a user interface provided, in particular a Human Machine Interface (short HMI). The technician can make the necessary device-specific parameter settings by entering these data into the respective automation device via the user interface and storing them within the automation device. Depending on the size of the automation system or automated machine, this can involve considerable effort during installation and commissioning of an automation system, especially if a large number of automation devices need to be integrated, set up and parametrized.

Furthermore, during troubleshooting (e.g. in the event of a failure of the automation device, a power fail in automation system, etc.), or during maintenance, for example, it may be necessary to read out operating data (e.g. error logs, operating hours, etc.) and/or change parameters (e.g. network or fieldbus address) from an automation device. However, this is only possible as long as the respective automation device is supplied with power or in operation, so that at least a standard user interface is available to display the operating data and, if necessary, change the parameters of the respective automation device. If, for example, the power supply of the respective automation device or the whole automation system is stopped because of a fault a fault in the automation device or in the automation system or due to a power failure, it is currently not possible to retrieve and analyse the operating data and, if necessary, change the parameters of an automation device. I.e., that neither read nor write access to operating data and/or parameters of an automation device is possible as long as the automation device is not supplied with power or is in a powerless state.

### SUMMARY

The objective of the present disclosure is to provide a system and a method, which provide more flexibility to retrieve operating data and/or parameters of automation devices of an automation system and which accelerate the configuration and parameterization of the automation devices and of the automation system during installation, commissioning and maintenance as well as simplify troubleshooting.

These and other objectives are solved by a system and method according to the independent claims. Advantageous embodiments of the present invention are described by the dependent claims.

According to the invention, these and other objectives are achieved by a system for querying and/or changing data of an automation device, the system comprising at least one automation device, which can be integrated into an automation system via a communication network, in particular a fieldbus system, and wherein the data, in particular a fieldbus address, are stored within the automation device. The system also comprises a mobile device which is set up for establishing a near-field communication connection (or short: NFC-connection) and a near-field communication module (or short: NFC-module) which is integrated into the automation device. The near-field communication module is set up for storing the data of the automation device and for a wireless exchange of the data of the automation device with the mobile device via the NFC-connection, wherein the mobile device interacts with the near-field communication module integrated in the automation device in such a way, that the mobile device transfers energy, required for the exchange of the data of the automation device via NFC-connection, to the near-field communication module during a powerless state of the automation module. Furthermore, the mobile device is set up to read out the data of the automation device stored in the near-field communication module, to display the data, to change at least changeable data of the displayed data via a user interface provided by the mobile device and to transmit data changes to the near-field communication module for storage via NFC-connection.

The main aspect of the present invention is that the data stored in an automation device can be queried and changed, if necessary, quite flexible. I.e., it is not necessary that the automaton device is up and running to query and/or changed the data of the automation device. When the automation device is in a powerless state, e.g., before or during installation and commissioning or in case of a service case during maintenance or even in the event of a failure of the automation device and/or power failure, then the NFC-module is supplied with energy by the mobile device via the NFC-connection. The data stored in the NFC-module integrated with the automation device can be read out and changed, if necessary, on the automation device without the need of any power supply - neither an external supply nor an internal battery unit. A user, e.g., a technician, can read and/or change the data simply by establishing an NFC-connection with a mobile device providing NFC functionality. The energy necessary for the data exchange is also provided by the near-field communication.

Ideally, the data of the automation device stored in the NFC-module comprises at least identification data for identifying the automation device and changeable parameter data, in particular the fieldbus address. So, the automation device can be easily identified, when the data stored in the NFC-module are read out by the mobile device, and the changeable parameter data, like e.g. the fieldbus address of the automation device may be easily changed, if necessary.

Furthermore, it is advantageous, if the NFC-module is set up that operating data of the automation device can be written to the near-field communication module as further data during normal operation. The operating data written into the NFC-module can be constantly updated during the normal operation. So, current operating data, like e.g., error logs, errors occurred before failure, operating hours, etc., is also available and can be queried via the NFC-connection with the mobile device. The operating data can be written into the NFC-module or updated by a processing unit of the automation device or by the firmware installed respectively.

In a preferred embodiment of the system, the automation device comprises a processing unit which has at least read access to the data stored in the NFC-module. The processing unit, for example, may read out the data from the NFC-module during a boot-up phase and/or during operation of the automation device. Thus, especially the parameter data can be provided to the processing unit and the firmware installed and running on the automation device.

In another preferred embodiment of the system, the automation device has a housing, wherein a marking for positioning the mobile device for establishing the near-field communication connection is provided on one outer side of the housing. The marking is quite useful to correctly position the mobile device and to establish the NFC-connection without unnecessary delay.

Furthermore, it is quite useful, if the NFC-module is designed as an RFID tag. RFID is short for Radio-frequency identification and uses electromagnetic fields to identify and track RFID tags attached or integrated with objects. The RFID tag comprises a tiny radio transponder-a combined receiver and transmitter unit, small storage unit (e.g., electronic microchip), an antenna as coupling element for establishing the connection and a capacitor for temporary energy storage, for example. When triggered by an electromagnetic interrogation pulse from a nearby device, set up to establish a connection, the RFID tag can transmit the data stored in its storage unit to the device wirelessly, wherein not only data, but also energy can be exchanged via electromagnetic waves between the device and the RFID tag.

Ideally, a tablet or smartphone, which is set up to establish the near-field communication connection with the near-field communication module or which provides NFC functionality, is used as mobile device.

Furthermore, the objectives given above are also achieved by a method for querying and/or changing data stored in an automation device, in particular a fieldbus address, the automation device being integrated into an automation system via a communication network, in particular via a fieldbus system, wherein a near-field communication connection for a wireless data exchange is established between a mobile device and a near-field communication module integrated in the automation device, wherein data of the automation device is stored in the NFC-module and wherein energy required for exchanging the data of the automation device via near-field communication connection is transferred from the mobile device to the near-field communication module. The data of the automation device stored in the near-field communication module is then read out by the mobile device via the near-field communication connection and displayed via a user interface provided by the mobile device. Then at least changeable data of the displayed data is changed via the user interface provided by the mobile device and data changes are transmitted to the NFC-module via the near-field communication connection to be stored in the NFC-module.

The method enables as well to read and change data on the automation data - stored in the NFC-module -without the need of any power supply, neither an external supply nor an internal battery unit, or the automation device or automation system running.

It is advantageous, if at least identification data for identifying the automation device and changeable parameter data, in particular the fieldbus address, are stored in the NFC-module as data of the automation device. Ideally, the identification data can be programmed unchangeably into the NFC-module during production of the automation device, to prevent an unintentional change of the identification data and provide secure identification of the automation device. The parameter data may be pre-assigned with changeable default values during production of the automation device, which can be changed during installation and commissioning, for example.

Furthermore, it is quite useful, if additionally, operating data of the automation device is written to the NFC-module as further data during normal operation of the automation device. Additionally, the data stored in the near-field communication module, in particular the parameter data, is read out by a processing unit of the automation device. Thus, changes of data, especially of parameter data, are directly provided to the processing unit and the firmware of the automation device. The data stored in the NFC-module can be read out by the processing unit, for example, during the boot-up phase or during operation of the automation device.

Ideally, the mobile device is positioned close to or on a marking which is attached to an outer side of a housing of the automation device for establishing the near-field communication connection between the mobile device and the NFC-module. The marking guarantees a smooth and fast establishment of the NFC-connection.

### BRIEF DESCRIPTION OF THE DRAWINGS

The present invention is described below in greater detail with reference to Figs.1 to 2, which show schematic and non-limiting advantageous embodiments of the invention by way of example. In the drawings:
Fig.1 shows a block diagram of a system for querying and/or changing data of an automation device according to the invention,
Fig. 2 shows a flowchart of a method for querying and/or changing data of an automation device according to the invention.

### DETAILED DESCRIPTION

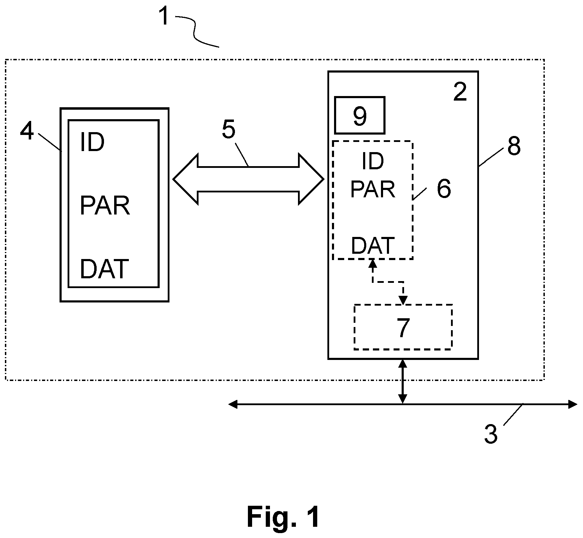

Figure 1 shows schematically an exemplary embodiment of the system 1 according to the invention. The system 1 comprises at least one automation device 2 and a mobile device 4. The automation device 2 may be a part of the automation system, like e.g., a drive, a servo amplifier, an inverter or any other automation device 2 used in an automation system. Therefore, the automation device 2 may be connected to a communication system 3, in particular to a fieldbus system 3, to be integrated into the automation system. The automation device 2 has a unique network address, in particular a fieldbus address, for communicating with the other automation devices, e.g. PLC, servo drives, inverters, sensor units and/or actuators of the automation system, wherein the network address or fieldbus address may be set during installation and commissioning of the automation device 2 and stored within the automation device 2.

Furthermore, the automation device 2 comprises a processing unit 7 apart from other components (e.g., memory unit, peripheral interfaces circuits, etc.). The processing unit 7 may be a controller, a microcontroller or microprocessor, which may be designed as an embedded system. Firmware is installed on the automation device 2 to perform data processing required to carry out its specific automation tasks of the automation device 2. The automation device 2 may also have a housing 8 to protect its electronic units, like the processing unit 7, memory unit, etc. and which may also provide connectors for e.g., the connection to the communication system 3. The housing 8 may also be used to mount the automation device 2 in a cabinet.

Furthermore, the automation device 2 comprises a near-field communication module 6 or short NFC-module 6, which is integrated into the automation device 2. For example, the NFC-module 6 may be mounted on a printed circuit board of the automation device 2, on which the other electronic units of the automation device 2, in particular the processing unit 7, are also arranged. The NFC-module 6 is set up for storing data ID, PAR, DAT of the automation device 2. These data ID, PAR, DAT stored within the NFC-module 6 may comprise at least identification data ID for identifying the automation device 2 and changeable parameter data PAR, which are used or needed by the automation device 2, in particular the processing unit 7 and the firmware installed on the automation device 2, during normal operation. The identification data ID may be programmed into the NFC-module 6 during production of the automation device, wherein the identification data ID may be unchangeable or read-only data. The identification data ID may comprise a serial number, an order identification, etc. of the automation device 2, for example.

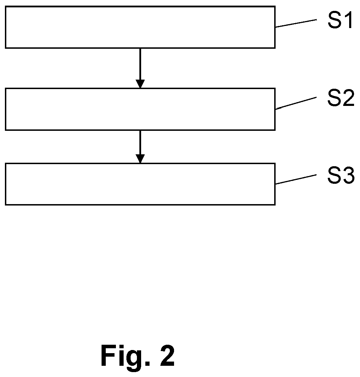

The parameter data PAR may comprise data like e.g., the network address or fieldbus address of the automation device 2, setpoints, output voltage, etc. or any other parameters used by automation device 2 to fulfil its task within the automation system. The parameter data PAR is usually changeable. They are normally set during installation and commissioning of the automation device or can be changed or adapted during service or maintenance routines. The parameter data PAR stored within the NFC-module 6 is pre-assigned with default values, which are written into the NFC-module 6 during the production of the automation device 2. For example, the parameter "network address" or "fieldbus address" may be pre-assigned with a default address or default node number, which can be changed e.g., during installation and commissioning of the automation device 2, which will be described in more detail below using Figure 2. Since the parameter data PAR is used by the automation device 2, in particular by the processing unit 7 and the firmware running on the automation device 2, during normal operation, the processing unit 7 may have at least read access to the NFC-module 6 (e.g., via an internal interface) to read out the data ID, PAR, DAT, in particular the parameter data PAR, from the NFC-module 6. The data ID, PAR, DAT may be read out during a boot-up phase of the automation device 2 and/or during operation of the automation 2, for example.

Furthermore, the data stored within the NFC-module 6 may comprise operating data DAT, like e.g. error logs, operating hours, etc. The operating data DAT is written to the NFC-module 6 and updated e.g., by the processing unit 7 and/or the firmware running on the automation device 2 during normal operation of the automation device 2. Therefore, the processing unit 7 may also have write access (e.g. via an internal interface) to the NFC-module 6 and the NFC-module 6 has to be designed for read and write access, respectively. Furthermore, even user defined data (e.g., revision identification, service specific data, etc.) could be stored in the NFC-module 6.

Furthermore, the NFC-module 6 is set up to for a wireless exchange of the data ID, PAR, DAT of the automation device 2, which are stored in the NFC-module 6, with the mobile device 4 of the system 1 using a near-field communication connection 5 or short NFC-connection 5. Therefore, the mobile device 4 is set up for establishing the NFC-connection 5 to the NFC-module 6. A tablet 4 or a smartphone 4, having NFC functionality, may be used as mobile device 4 and an RFID tag 6 may be used as NFC-module 6 integrated into the automation device 2. Near-field communication (short: NFC) is possible coupling method, which is based on Radio Frequency Identification technology (short: RFID technology) in near-field range (e.g., over a distance of just a few centimeters). NFC enables the wireless exchange of data between two devices - like the NFC-module 6 and the mobile device 4, while these devices are in near-field range and both having NFC functionality.

Furthermore, the mobile device 4 can interact with the NFC-module 6 in such a way, that the mobile device 4 also transfers the energy, required for the wireless data exchange with NFC-module 6, to the NFC-module 6 via the NFC-connection 5, which enables establishing the NFC-connection 5 and wireless data exchange between the NFC-module 6 and the mobile device 4 via the NFC-connection 5. When the automation device 2 is currently in a powerless state (e.g. out of operation and/or without a power supply due to a failure), then the mobile device 4 supplies the NFC-module 6 with energy via the NFC-connection 5. So, the data ID, PAR, DAT stored in the NFC-module 6 can be read out by the mobile device 4, even if the automation device is not running or in a powerless state. As long as the automation device 2 is up and running, the NFC-module 6 is internally supplied with power by the automation device 2. So, data ID, PAR, DAT stored in the automation device 2 can be queried and/or changed - regardless of the current power supply and/or operating status of the automation device 2.

The communication necessary for the data exchange as well as providing a user with user interface for displaying and changing the data ID, PAR, DAT are handled by the mobile device 4. The mobile device 4 is therefore set up to read out the data ID, PAR, DAT of the automation device 2 stored in the NFC-module 6 via the NFC-connection 5 after establishing the NFC-connection 5. Then the mobile device 4 is set up to display the read-out data ID, PAR, DAT via a user interface to a user and to provide the user with the possibility to change at least the changeable parameter data PAR via the user interface. Furthermore, the mobile device 4 is set up to transmit the changes of the changeable parameter data PAR to the NFC-module 6 via the NFC-connection 5, where the data changes are stored. An application, which provides a simple and self-explanatory user interface, in particular for handling data display and data changes, may be provided on the mobile device 4. The user may open this application on the mobile device 4 to query the data ID, PAR, DAT stored in the NFC-module 6 and/or to change in particular the parameter data PAR.

A marking 9 may be arranged on an outer side of the housing 8 of the automation device 2 to facilitate the establishment of the NFC-connection 5 between the mobile device 4 and the NFC-module 6. If the mobile device 4 is positioned close to or on the marker 9, the NFC-connection with the NFC-module 6 can be established easily and quickly.

Figure 2 shows schematically and exemplary a flowchart of a method for querying and/or changing data of an automation device 2, wherein the automation device comprises the integrated NFC-module 6. Data ID, PAR, DAT are stored on the NFC-module 6, which a user, e.g., a service technician wants to read out and change, if necessary, during installation and commissioning of the automation device 2 or the automation system or during service and maintenance of the automation device 2 at a customer site or during troubleshooting (e.g. because of a failure of the automation device 2 or the automation system or because of a power failure).

During an establishing step S1 the mobile device 4 is positioned close to or on the marker 9 on an outer side of the housing 8 of the automation device 2 for establishing the NFC-connection 5 between the mobile device 4 and the NFC-module 6. If a corresponding application is available or installed on the mobile device 4, the application may be opened before positioning the mobile device 4 close to or on the marker 9. The mobile device 4 then establishes the NFC-connection 5 for the wireless data exchange with the NFC-module 6 and also provides the NFC-module 6 with the energy required for wireless data exchange via the NFC-connection 5, since the automation device 2 is in a powerless state. Thus, the user can read out the data ID, PAR, DAT stored in the NFC-module during a read-out step S2 and change parameter data PAR during a changing step S3, even if the automation device 2 is not up and running - for example, before being integrated into the automation system during installation and commissioning or during replacement of the automation device in a service case at the customer site or when the automation device is down due to a failure or power fail.

After establishing the NFC-connection 5 between the mobile device 4 and the NFC-module 6 integrated into the automation device 2 during the establishing step S1, the mobile device 4 starts a scan and reads out the data ID, PAR, DAT of the automation device 2 stored in NFC-module 6 via the NFC-connection 5 during the read-out step S2. Then, the read-out data ID, PAR, DAT can be displayed on the mobile device 4, e.g. using the user interface provided by the mobile device 4 or the corresponding application on the mobile device 4. The user may identify the automation device 2 by the identification data ID (e.g., serial number, order identification, etc.) displayed, wherein the identification data ID was programmed into the NFC-module 6, for example, during the production of the automation device 2 and these data ID is read-only or unchangeable. Furthermore, the user may be displayed changeable parameter data PAR (e.g. network address, fieldbus address, etc.), having default values pre-assigned during the production of the automation device 2, if the automation device 2 is newly installed, for example.

During the changing step S3 the user may change the parameter data PAR - e.g., change the pre-assigned default values to parameter values required for the operation of the automation device 2 in the automation system during installation and commissioning. For example, the fieldbus address or the node number of the automation device 2 may be changed from the default value to a unique network address or a unique node number or a fieldbus address of the automation device 2 within the automation system. The data changes of the changeable data PAR may then be transmitted to the NFC-module 6 via the NFC-connection 5 during the changing step S3. After the transmission the data changes (e.g. unique network address, unique node number, etc.) are stored in the NFC-module 6 and thus immediately available on the automation device 2. The data ID, PAR, DAT, in particular the parameter data PAR, can be read out from the NFC-module 6 by the processing unit 7 and/or by the firmware of the automation device 2, for example, during a boot-up phase and/or during operation of the automation device 2.

The system 1 as well as the method may not only be used for the installation and commissioning of a single automation device 2 before integrating it into an automation system, but they could also be used to parametrize a plurality of the automation devices 2, before integrating them into the automation system and before first commissioning. For example, certain settings of the parameter data PAR may be stored on the mobile device 4, e.g. using the corresponding application and then easily copied from one automation device 2 to another. Furthermore, the system 1 and the method may be used during maintenance or service. For example, the data ID, PAR, DAT may be read-out by the mobile device 4 from the NFC-module 6 of an automation device 2 to be replaced via the NFC-connection 5 during the read-out step S2. Then, in particular the settings of the parameter data PAR may be stored on the mobile device 4, e.g. using the corresponding application, and applied to the replacement automation device 2. For example, the default values of the parameter data PAR of the replacement automation device 2 are changed to the parameter settings stored on the mobile device 6 by transmitting them to the NFC-module 6 of the replacement automation device 2 during the changing step 3. The parameter settings may be immediately available for the processing unit 7 and/or the firmware of the replacement automation device 2 and can be used, for example, during the first boot-up phase and/or during operation of the replacement automation device 2.

Furthermore, the system and the method can be used for analysis during service and maintenance and/or for troubleshooting, in particular if operating data DAT (e.g. error logs, operation hours, etc.) is also stored in the NFC-module 6. The operating data DAT may be written into the NFC-module 6 during normal operation of the automation device 2 by the processing unit 7 and/or the firmware, for example. During the read-out step S2 the operating data DAT can be read-out together with the identification data ID and the parameter data PAR, stored in the NFC-module, via the NFC-connection 5 by the mobile device 4. The operating data DAT can then be displayed- together with the identification data ID and the parameter data PAR - on the mobile device 4 e.g. by the user interface to the user, who has the possibility to use the operating data DAT for maintenance purposes or to use them for error diagnostics and troubleshooting, e.g., to locate a failure of the automation device and/or by identifying the last error occurred before the failure by analyzing the operating data DAT.

Furthermore, it may be possible to transfer the identification data ID and at least the operation data DAT from the mobile device 4 via an internet connection to a cloud service. The transferred data ID, DAT may be stored in a centralized data storage and could be used for further analysis, especially predictive maintenance.

## Claims

1. System (1) for querying and/or changing data (ID, PAR, DAT) of an automation device (2), the system (1) comprising at least one automation device (2), which can be integrated into an automation system via a communication network (3), in particular a fieldbus system, and wherein the data (ID, PAR, DAT), in particular a fieldbus address, is stored within the automation device (2), ***characterized in that*** the system (1) also comprises a mobile device (4) which is set up for establishing a near-field communication connection (5), ***in that*** a near-field communication module (6) is integrated into the automation device (2), which near-field communication module (6) is set up for storing the data (ID, PAR, DAT) of the automation device (2) and for a wireless exchange of the data (ID, PAR, DAT) of the automation device (2) with the mobile device (4) via the near-field communication connection (5), the mobile device (4) interacting with the near-field communication module (6) integrated in the automation device (2) in such a way, that the mobile device (4) transfers energy, required for the exchange of the data (ID, PAR, DAT) of the automation device (2) via the near-field communication connection (5), to the near-field communication module (6) during a powerless state of the automation device (2), ***and in that*** the mobile device (4) is furthermore set up to read out the data (ID, PAR, DAT) of the automation device (2) stored in the near-field communication module (6), to display the data (ID, PAR, DAT), to change at least changeable data (PAR) of the displayed data (ID, PAR, DAT) via a user interface provided by the mobile device (4) and to transmit data changes to the near-field communication module (6) for storage via near-field communication connection (5).

2. System (1) according to claim 1, ***characterized in that*** the data (ID, PAR, DAT) of the automation device (2) stored in the near-field communication module (6) comprises at least identification data (ID) for identifying the automation device (2) and changeable parameter data (PAR), in particular the fieldbus address.

3. System (1) according to one of claims 1 or 2, ***characterized in that*** the near-field communication module (6) is set up that operating data (DAT) of the automation device (2) can be written to the near-field communication module (6) as further data (DAT) during normal operation.

4. System (1) according to one of claims 1 to 3, ***characterized in that*** the automation device (2) comprises a processing unit (7) having read access to the data (ID, PAR, DAT) stored in the near-field communication module (6).

5. System (1) according to one of claims 1 to 4, ***characterized in that*** the automation device (2) has a housing (8), wherein a marking (9) for positioning the mobile device (4) for establishing the near-field communication connection (5) is provided on an outer side of the housing (8).

6. System (1) according to one of claims 1 to 5, ***characterized in that*** the near-field communication module (6) is designed as an RFID tag.

7. System (1) according to one of claims 1 to 6, ***characterized in that*** the mobile device (4) is a tablet or smartphone which is set up to establish the near-field communication connection (5) with the near-field communication module (6).

8. Method for querying and/or changing data (ID, PAR, DAT) stored in an automation device (2), in particular a fieldbus address, the automation device (2) being integrated into an automation system via a communication network (3), in particular via a fieldbus system, ***characterized in that*** a near-field communication connection (5) for a wireless data exchange is established between a mobile device (4) and a near-field communication module (6) integrated in the automation device (2) (S1), in which near-field communication module (6) data (ID, PAR, DAT) of the automation device (2) is stored, wherein energy required for exchanging the data (ID, PAR, DAT) of the automation device (2) via the near-field communication connection (5) is transferred from the mobile device (4) to the near-field communication module (6) during a powerless state of the automation device (2), ***in that*** the data (ID, PAR, DAT) of the automation device (2) stored in the near-field communication module (6) is read out by the mobile device (4) via the near-field communication connection (5) and displayed via a user interface provided by the mobile device (4) (S2), ***and in that*** at least changeable data (PAR) of the displayed data (ID, PAR, DAT) is changed via the user interface provided by the mobile device (4) and data changes are transmitted to the near-field communication module (6) via the near-field communication connection (5) to be stored in the near-field communication module (6) (S3).

9. Method according to claim 8, ***characterized in that*** at least identification data (ID) for identifying the automation device (2) and changeable parameter data (PAR), in particular the fieldbus address, are stored in the near-field communication module (6) as data (ID, PAR, DAT) of the automation device (2).

10. Method according to claim 9, ***characterized in that*** during production of the automation device (2), the identification data (ID) is programmed unchangeably into the near-field communication module (6) and the parameter data (PAR) is pre-assigned with changeable default values.

11. Method according to one of claims 8 to 10, ***characterized in that*** operating data (DAT) of the automation device (2) is written to the near-field communication module (6) as further data during normal operation of the automation device (2).

12. Method according to one of claims 8 to 11, ***characterized in that*** the data (ID, PAR, DAT) stored in the near-field communication module (2), in particular the parameter data (PAR), is read out by a processing unit (7) of the automation device (2).

13. Method according to one of claims 8 to 12, ***characterized in that,*** for establishing the near-field communication connection (5) between the mobile device (4) and the near-field communication module (6), the mobile device (4) is positioned close to or on a marking (9) (S1), which is provided on an outer side of a housing (8) of the automation device (2).
